# EUROPEAN PATENT APPLICATION

(11) **EP 3 889 972 A1**
(43) Date of publication of application: **06.10.2021**
(21) Application number: 19888828.1
(22) Date of filing: 08.10.2019
(51) Int. Cl.: G21D 3/04

(54) **METHOD FOR MONITORING NUCLEAR POWER PLANT IN TRANSIENT STATE BY USING SIGNAL CLASSIFICATION**

(30) Priority: 30.11.2018 KR 20180152563
(71) Applicant: Korea Hydro & Nuclear Power Co., Ltd, 38120 Gyeongsangbuk-do (KR)
(72) Inventor: MIN, Ji Ho, Sejong 30064 (KR); KIM, Dae Woong, Sejong 30130 (KR); LEE, Byoung Oh, Daejeon 34075 (KR); OH, Jeong Hag, Ulsan 44743 (KR); HA, Hooh Kwon, Gyeongju-si, Gyeongsangbuk-do 38120 (KR)
(74) Representative: Habermann, Hruschka & Schnabel
(86) International application number: PCT/KR2019/013209
(87) International publication number: WO 2020/111498

(57) **Abstract**

The present invention relates to a method for monitoring a nuclear power plant in a transient state, the method comprising the steps of: classifying signals to be monitored of the nuclear power plant into a constant monitoring signal, a primary system monitoring signal, a secondary system monitoring signal, and a monitoring signal during normal operation; constantly monitoring the constant monitoring signal at the time of starting the nuclear power plant; sequentially initiating monitoring of the primary system monitoring signal and the secondary system monitoring signal while monitoring the constant monitoring signal; and initiating monitoring of the monitoring signal during normal operation when it is determined to be operating normally after initiating the monitoring of the secondary system monitoring signal.

## Description

### Technical Field

The present disclosure relates to a method of monitoring a nuclear power plant in a transient state using signal classification.

### Background Art

The early warning system of a nuclear power plant is a system that generates a predicted value for an operating state using a predictive model, and detects and alerts a defect early based on the difference between the prediction value and an actual measurement value.

A prediction model uses a data-based model, and when the power plant is in a transient state such as a start or stop operation, the reliability of the prediction value is low due to characteristics of an algorithm and thus it is hard to apply.

### Disclosure

### Technical Problem

Accordingly, the present disclosure provides a method for monitoring a nuclear power plant in a transient state with improved reliability of an early warning system.

### Technical Solution

An object of the present disclosure is to provide a method of monitoring a nuclear power plant in a transient state, and the method includes: classifying signals to be monitored of the nuclear power plant into a constant monitoring signal, a primary system monitoring signal, a secondary system monitoring signal, and a normal operation monitoring signal; constantly monitoring the constant monitoring signal at a time of starting the nuclear power plant; sequentially initiating monitoring of the primary system monitoring signal and the secondary system monitoring signal while monitoring the constant monitoring signal; and initiating monitoring of the normal operation monitoring signal when a normal operation is determined after the initiating of the monitoring of the secondary system monitoring signal.

The initiating of the monitoring of the primary system may be performed when a primary system initiation signal reaches a predetermined level.

The primary system monitoring signal may be divided into a plurality of groups, and initiating monitoring of each of the groups may be sequentially performed according to a magnitude of the primary system initiation signal.

The first system initiation signal may include at least one of a reactor output, a reactor coolant pump (RCP) rotational speed, and an RCS cold leg temperature.

The initiating of the monitoring of the secondary system monitoring signal may be performed when a secondary system initiation signal reaches a predetermined level.

The secondary system monitoring signal may be divided into a plurality of groups, and initiating monitoring of each of the groups may be sequentially performed according to a magnitude of the secondary system initiation signal.

The secondary system initiation signal may include at least one of a turbine rotational speed and a generator output.

Some groups of the secondary system monitoring signal may be initiated to be monitored before some groups of the primary system monitoring signal.

### Advantageous Effects

According to the present disclosure, there is provided a method of monitoring a nuclear power plant in a transient state with improved reliability of an early warning system.

### Description of Drawings

FIG. 1 is a flow chart of a method for monitoring a nuclear power plant according to a first embodiment of the present disclosure,
FIG. 2 is a diagram illustrating a monitoring signal for each step in the method for monitoring a nuclear power plant according to the first embodiment of the present disclosure,
FIG. 3 is a flowchart of a method for monitoring a nuclear power plant according to a second embodiment of the present disclosure,
FIG. 4 is a flowchart of a method for monitoring a nuclear power plant according to a third embodiment of the present disclosure,
FIG. 5 is a flowchart of a method for monitoring a nuclear power plant according to a fourth embodiment of the present disclosure.

### Mode for Disclosure

Hereinafter, the present disclosure will be described in more detail with reference to the drawings.

The accompanying drawings are merely examples shown to illustrate the technical scope of the present invention more detail, and the scope of the present invention is not limited to the accompanying drawings. In addition, in the accompanying drawings, sizes and intervals may be exaggerated differently from the real world in order to explain the relationship between respective components.

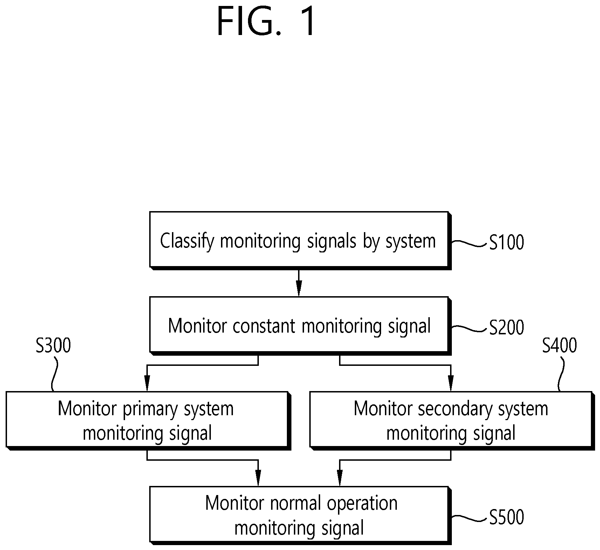

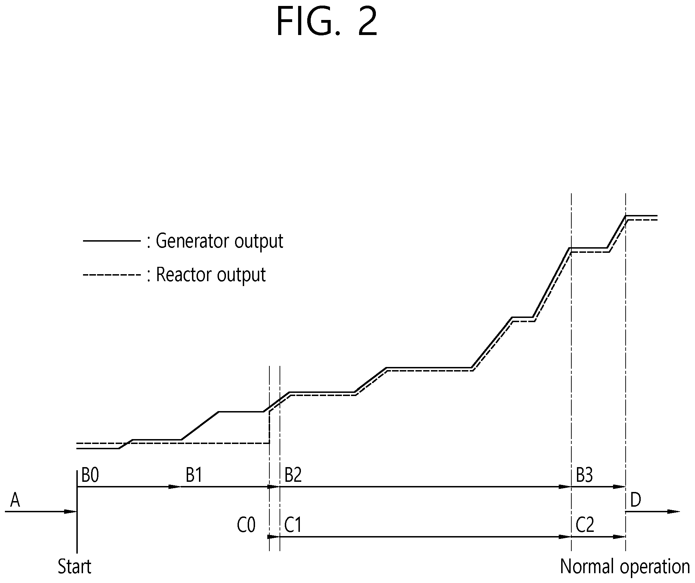

A method of monitoring a nuclear power plant according to a first embodiment of the present disclosure will be described with reference to FIGS. 1 and 2. FIG. 1 is a flowchart illustrating a method for monitoring a nuclear power plant according to the first embodiment of the present disclosure, and FIG. 2 illustrates a monitoring signal for each step in the method for monitoring a nuclear power plant according to the first embodiment of the present disclosure.

First, signals to be monitored of the nuclear power plant is classified into a constant (all-time) monitoring signal, a primary system monitoring signal, a secondary system monitoring signal, and a normal operation monitoring signal (S100).

The constant monitoring signal (signal A in FIG. 2) is a signal to be continuously monitored before or after the power plant is started or stopped. The constant monitoring signal may include, but is not limited to, at least one of a spent fuel storage system signal and a radiation monitoring system signal.

The primary system monitoring signal (signal B in FIG. 2) is a monitoring signal for each step of a power-plant primary system.

The primary system monitoring signal may include signals of primary system major equipment such as a reactor coolant pump (RCP) and a pressurizer. Primary system monitoring signal may also include a signal of secondary system equipment associated with major primary system equipment.

The primary system monitoring signal is divided into a plurality of sub-groups (B0, B1, B2, B3 in FIG. 2) according to a start-up step.

The secondary system monitoring signal (signal C in FIG. 2) is a monitoring signal for each step of a secondary system of the power plant.

The secondary system monitoring signal may include signals of major secondary system equipment such as a turbine and a generator. The secondary system monitoring signal may also include a signal of the primary system equipment associated with major secondary system equipment.

The secondary system monitoring signal is divided into a plurality of sub-groups (CO, C1, and C2 in FIG. 2) according to a start-up step.

The normal operation signal (signal D in FIG. 2) is a signal to be monitored from the time of normal operation.

The normal operation signal may include, but is not limited to, some signals of a deaerator and a main feedwater system. The normal operation signal may be a signal whose value changes according to an output from a reactor or generator.

Next, starting of the power plant is initiated, and at this step, the constant monitoring signal is continuously being monitored (S200). The constant monitoring signal continues to be monitored in subsequent start-up and normal operation steps. The classification of the monitoring signals (S100) and the monitoring of the constant monitoring signal (S200) described above may be initiated in a different order or may be initiated simultaneously.

Thereafter, monitoring of a primary system start signal is initiated (S300).

The monitoring of the primary system start signal is determined to be initiated according to a value of the primary system initiation signal.

The primary system initiation signal may be a reactor output or a major signal of the primary system. The primary system initiation signal is not limited thereto, but may include one or more of a reactor output, an RCP rotational speed, and an RCS cold leg temperature. The primary system initiation signal may include two or more signals, and an initiation condition may be variously modified, such as an AND combination or an OR combination between signals. In addition, at least some of the primary system initiation signals for initiation of each group may be different from each other.

The primary system start signal is initiated to be monitored when a primary system initiation signal reaches a predetermined value (satisfies a predetermined condition).

A plurality of groups of primary system start signals are sequentially initiated to be monitored when primary system initiation signals reach a predetermined value. In the first embodiment, "the initiation signal has reached a predetermined value" may mean that a corresponding signal to be monitored has reached a normal condition.

For example, if the RCP rotational speed is greater than or equal to 1000RPM and the reactor output is greater than or equal to 0.1%, the monitoring of the B0 group starts, and if the reactor output is greater than or equal to 10% and the temperature of the RCS cold leg is greater than or equal to 294°C the monitoring of the B1 group starts.

Next, monitoring of the secondary system start signal is initiated (S400).

The monitoring of the secondary system start signal is determined to be initiated according to a value of the secondary system initiation signal.

The secondary system initiation signal may be a generator output or a major signal of the secondary system. The secondary system initiation signal is not limited thereto, but may include one or more of a generator output and a turbine rotational speed. The secondary system initiation signal may include two or more signals, and the initiation condition may be variously modified, such as an AND combination or an OR combination between signals. In addition, at least some of the secondary system initiation signals for initiation of each group may be different from each other.

The secondary system start signal is initiated to be monitored when the secondary system initiation signal reaches a predetermined value (satisfies a predetermined condition).

A plurality of groups of secondary system start signals are sequentially initiated to be monitored when the secondary system initiation signal reaches a predetermined value.

For example, when the rotational speed of the turbine is greater than or equal to 20RPM and the output of the generator is greater than or equal to 20%, the monitoring of the C0 group starts, and when the rotational speed of the turbine is greater than or equal to 40RPM or the output of the generator is greater than or equal to 40%, the monitoring of the C1 group starts.

Here, as shown in FIG. 2, some groups of the secondary system monitoring signals may be initiated later than some groups of the primary system monitoring signals.

Next, when it is determined that the power plant has entered a normal operation step, monitoring of the normal operation monitoring signal is initiated (S500).

The determination as to whether the power plant is in normal operation may be performed based on various criteria such as a reactor output and/or a generator output.

According to the first embodiment described above, signals that are normally operated in each step in the start-up process are classified, and monitoring is initiated after each signal reaches a condition representing a normal value. Accordingly, the reliability of the early warning system is improved during the start-up operation, and monitoring using the early warning system is possible even in start-up operation.

In the above first embodiment, the signal monitoring during the start-up operation of the power plant has been described, and the present disclosure may be applied to the signal monitoring in other transient step other than a start-up step, for example, a stop operation.

The classification of the monitoring signals and the initiation of monitoring in the above-described first embodiment may be performed in various ways, and this will be described through the second to fourth embodiments.

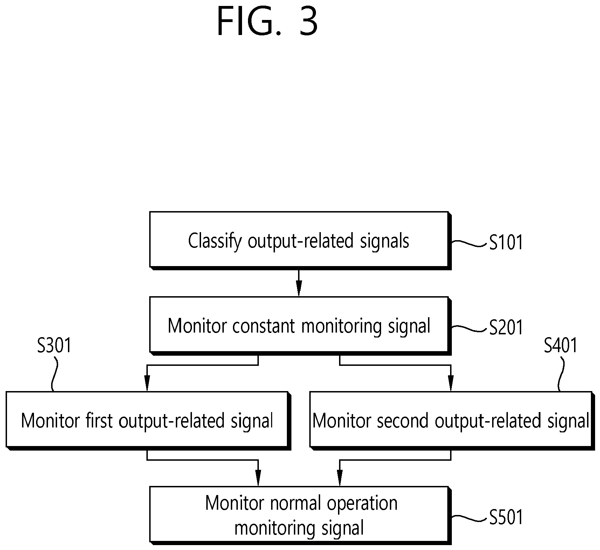

A monitoring method according to a second embodiment of the present disclosure will be described with reference to FIG. 3.

In the description of the second embodiment, it will be described with reference to the monitoring graph of FIG. 2, but a monitoring graph in the second embodiment may be variously modified. In the following description, parts different from the first embodiment will be mainly described.

First, signals to be monitored of the nuclear power plant is classified into a constant monitoring signal, a first output-related signal, a second output-related signal, and a normal operation monitoring signal (S101).

The first output-related signal (signal B in FIG. 2) is a signal related to a reactor output.

The first output-related signal may include signals of a reactor coolant pump (RCP), a pressurizer etc.

The first output-related signal is divided into a plurality of sub-groups (B0, B1, B2, and B3 in FIG. 2) according to a start-up step.

The second output-related signal (signal C in FIG. 2) is a signal related to a generator output.

The second output-related signal may include signals of a turbine, a generator, etc.

The second output-related signal is divided into a plurality of sub-groups (CO, C1, C2 in FIG. 2) according to a start-up step.

Next, the starting of the power plant is initiated, and at this step, the constant monitoring signal is continuously being monitored (S201). The constant monitoring signal continues to be monitored in subsequent start-up and normal operation steps.

Thereafter, monitoring of the first output-related signal is initiated (S301).

The monitoring of the signal related to the first output is determined to be initiated according to a value of a reactor output.

For example, the first output-related signal is initiated to be monitored when a reactor output reaches a predetermined value (satisfies a predetermined condition).

The plurality of groups of the first output-related signals may be sequentially initiated to be monitored when reactor outputs sequentially reach a predetermined value. In the second embodiment, "the output has reached a predetermined value" may mean that a corresponding signal to be monitored has reached a normal condition.

Next, monitoring of the second output-related signal is initiated (S401).

The monitoring of the second output-related signal is determined to be initiated according to a value of a generator output.

The second output-related signal may be initiated to be monitored when the value of the generator output reaches a predetermined value (satisfies a predetermined condition).

A plurality of groups of the second output-related signals is sequentially initiated to be monitored when generator outputs sequentially reach a predetermined value.

Here, as shown in FIG. 2, some groups of the second output-related signals may be initiated later than some groups of the first output-related signals.

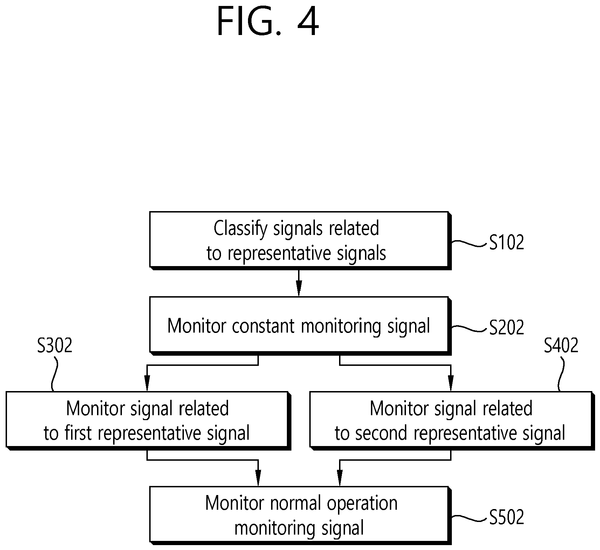

A monitoring method according to a third embodiment of the present disclosure will be described with reference to FIG. 4.

In the description of the third embodiment, it will be described with reference to the monitoring graph of FIG. 2, but a monitoring graph in the third embodiment may be variously modified. In the following description, parts different from the first embodiment will be mainly described.

First, signals to be monitored of a nuclear power plant is classified into a constant monitoring signal, a signal related to a first representative signal, a signal related to a second representative signal, and a normal operation monitoring signal (S102).

The signal related to the first representative signal (signal B in FIG. 2) is a signal related to a first representative signal of the primary system. The signal related to the first representative signal may be a signal that changes according to a value of the first representative signal.

The signal related to the first representative signal may include signals of a reactor coolant pump (RCP), a pressurizer, etc. and the first representative signal may include one or more of an RCP speed, a nuclear power output, and an RCS cold leg temperature.

The signal related to the first representative signal is divided into a plurality of sub-groups (B0, B1, B2, B3 in FIG. 2) according to a start-up step.

The signal related to the second representative signal (signal C in FIG. 2) is a signal related to a second representative signal which is a representative signal of the secondary system. The signal related to the second representative signal may be a signal that changes according to a value of the second representative signal.

The signal related to the second representative signal may include signals of a turbine, a generator, etc., and the second representative signal may include any one of a turbine rotational speed and a generator output.

The signal related to the second representative signal is divided into a plurality of sub-groups (CO, C1, C2 in FIG. 2) according to a start-up step.

Next, starting of the power plant is initiated, and at this step, the constant monitoring signal is continuously being monitored (S202). The constant monitoring signal continues to be monitored in subsequent start-up and normal operation steps.

Thereafter, monitoring of a signal related to the first representative signal is initiated (S302).

The monitoring of the signal related to the first representative signal may be determined to be initiated according to the value of the first representative signal.

The first representative signal-related signal is monitored when the value of the first representative signal reaches a certain value (which satisfies a certain condition). In the third embodiment, "the representative signal has reached a certain value" may mean that the corresponding monitoring target signal has reached a normal condition.

The plurality of groups of signals related to the first representative signal is sequentially started to be monitored when the first representative signal sequentially reaches a predetermined value.

Next, monitoring of a signal related to the second representative signal is initiated (S402).

The monitoring of the signal related to the second representative signal may be determined to be initiated according to a value of the second representative signal.

The second representative signal-related signal is monitored when the value of the second representative signal reaches a predetermined value (satisfies a predetermined condition).

The plurality of groups of signals related to the second representative signal is sequentially initiated when the second representative signal reaches a predetermined value in sequence.

Here, as shown in FIG. 2, some groups of signals related to the second representative signal may be started later than some groups of signals related to the first representative signal.

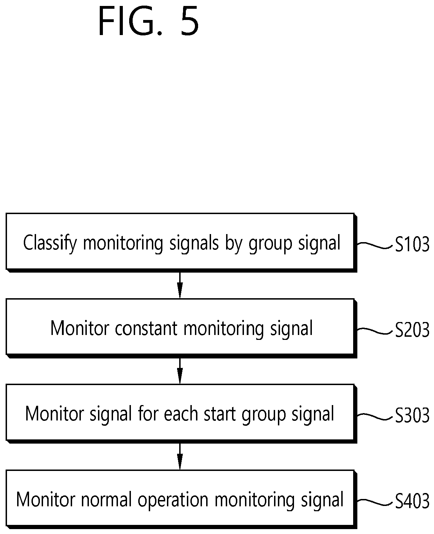

A monitoring method according to a fourth embodiment of the present disclosure will be described with reference to FIG. 5.

In the description of the fourth embodiment, it will be described with reference to the monitoring graph of FIG. 2, but the monitoring graph in the fourth embodiment may be variously modified. In the following description, parts different from the first embodiment will be mainly described.

First, signals to be monitored of the nuclear power plant is classified into a constant monitoring signal, a starting group signal, and a monitoring signal during normal operation (S103).

In the fourth embodiment, there are seven start group signals (BO, B1, B2, B3, CO, C1, C2 signals in FIG. 2), but are not limited thereto. The starting group signal may include a primary system-related signal (BO, B1, B2, B3 signal) and a secondary system-related signal (CO, C1, C2 signals).

Each starting group signal is monitored by a different group representative signal.

The group representative signal is not limited thereto, but may include an RCP speed, a reactor output, an RCS cold tube temperature, a turbine speed, and a generator output. In another embodiment, each start-up group signal may be divided into a detailed group signal.

Next, starting of the power plant is initiated. At this step, the constant monitoring signal is continuously being monitored (S203). The constant monitoring signal continues to be monitored in subsequent start-up and normal operation steps.

Thereafter, monitoring of each start group signal is initiated (S303).

Each start group signal is determined to be initiated according to a value of a corresponding group representative signal. That is, when a group representative signal reaches a certain value, each group signal is initiated to be monitored. In addition, when the signal is divided into sub-group signals, the sub-group signals are sequentially initiated to be monitored as values of group representative signals sequentially change.

The above-described embodiments are illustrative of the present disclosure, and the present disclosure is not limited thereto. Since those skilled in the art can implement the present disclosure through numerous variations from the above, the technical scope of the invention is defined by the appended claims.

## Claims

1. A method of monitoring a nuclear power plant in a transient state, the method comprising:
classifying signals to be monitored of the nuclear power plant into a constant monitoring signal, a primary system monitoring signal, a secondary system monitoring signal, and a normal operation monitoring signal;
constantly monitoring the constant monitoring signal at a time of starting the nuclear power plant;
sequentially initiating monitoring of the primary system monitoring signal and the secondary system monitoring signal while monitoring the constant monitoring signal; and initiating monitoring of the normal operation monitoring signal when a normal operation is determined after the initiating of the monitoring of the secondary system monitoring signal.

2. The method of claim 1,
wherein the initiating of the monitoring of the primary system is performed when a primary system initiation signal reaches a predetermined level.

3. The method of claim 2,
wherein the primary system monitoring signal is divided into a plurality of groups,
wherein initiating monitoring of each of the groups is sequentially performed according to a magnitude of the primary system initiation signal.

4. The method of claim 3,
wherein the first system initiation signal comprises at least one of a reactor output, a reactor coolant pump (RCP) rotational speed, and an RCS cold leg temperature.

5. The method of claim 3,
wherein the initiating of the monitoring of the secondary system monitoring signal is performed when a secondary system initiation signal reaches a predetermined level.

6. The method of claim 5,
wherein the secondary system monitoring signal is divided into a plurality of groups,
wherein initiating monitoring of each of the groups is sequentially performed according to a magnitude of the secondary system initiation signal.

7. The method of claim 6,
wherein the secondary system initiation signal comprises at least one of a turbine rotational speed and a generator output.

8. The method of claim 6,
wherein some groups of the secondary system monitoring signal are initiated to be monitored before some groups of the primary system monitoring signal.
